Europäisches Patentamt

European Patent Office

Office européen des brevets

(11) Veröffentlichungsnummer: **0 258 944**
**A2**

(12) # EUROPÄISCHE PATENTANMELDUNG

(21) Anmeldenummer: 87201637.3

(22) Anmeldetag: 31.08.87

(51) Int. Cl.⁴: **C04B 35/46 , C04B 35/48 ,**
**H01B 3/12 , H01G 4/12**

(30) Priorität: 04.09.86 DE 3630064

(43) Veröffentlichungstag der Anmeldung:
09.03.88 Patentblatt 88/10

(84) Benannte Vertragsstaaten:
DE FR GB NL

(71) Anmelder: **Philips Patentverwaltung GmbH**
**Wendenstrasse 35 Postfach 10 51 49**
**D-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **FR GB NL**

(72) Erfinder: **Hennings, Detlev, Dr.**
**Hangstrasse 28**
**D-5100 Aachen(DE)**

(74) Vertreter: **Nehmzow-David, Fritzi-Maria et al**
**Philips Patentverwaltung GmbH**
**Wendenstrasse 35 Postfach 10 51 49**
**D-2000 Hamburg 1(DE)**

(54) Verfahren zur Herstellung eines Dielektrikums mit Perowskitstruktur.

(57) Verfahren zur Herstellung eines Dielektrikums mit Perowskitstruktur auf Basis von Erdalkali-Titanaten, Erdalkali-Zirkonaten und/oder Erdalkali-Stannaten, wobei dichte, chemisch heterogene Sinterkörper aus Pulvergemischen unterschiedlicher Perowskite, die zur Bildung homogener Mischkristalle befähigt sind, durch uniaxiales Heißpressen hergestellt werden.

EP 0 258 944 A2

## Verfahren zur Herstellung eines Dielektrikums mit Perowskitstruktur

Die Erfindung betrifft ein Verfahren zur Herstellung eines Dielektrikums mit Perowskitstruktur auf Basis von Erdalkali-Titanaten, Erdalkali-Zirkonaten und/oder Erdalkali-Stannaten.

Für die Herstellung von Kondensatoren werden für bestimmte Anwendungszwecke Dielektrika benötigt, die nicht nur eine hohe relative Dielektrizitätskonstante $\epsilon_r$ aufweisen, sondern deren Dielektrizitätskonstante auch über einen relativ breiten Temperaturbereich nahezu stabil bleibt. Diese Anforderungen erfüllen keramische Dielektrika wie ferroelektrische Perowskite auf der Basis von $BaTiO_3$ und dessen Mischkristallen mit anderen Perowskiten, wie z.B. $BaZrO_3$, $SrTiO_3$, $CaTiO_3$, $BaSnO_3$.

Wegen der meist lückenlosen Mischbarkeit dieser Perowskite werden aus entsprechenden Pulvermischungen bei Sintertemperaturen im Bereich von 1350 bis 1400 °C homogene Mischkristalle mit hohen relativen Dielektrizitätskonstanten erhalten. Die Sintertemperaturen müssen relativ hoch sein, um ausreichende keramische Dichten des Sinterkörpers erreichen zu können.

Homogene Mischkristalle aus $BaTiO_3$ mit anderen Perowskiten zeigen am ferroelektrischen Curiepunkt in der Regel ein sehr hohes Maximum der relativen Dielektrizitätskonstanten mit $\epsilon_r \approx 10\ 000$ bis $20\ 000$. Ein Nachteil ist bei diesen Materialien jedoch, daß sie wegen der Steilheit des Maximums der Dielektrizitätskonstanten nicht die Bedingung der Temperaturstabilität erfüllen.

Der Erfindung liegt die Aufgabe zugrund, ein Verfahren anzugeben, mit welchem Dielektrika mit Perowskitstruktur hergestellt werden können, die hohe relative Dielektrizitätskonstanten aufweisen, welche eine ausreichende Stabilität über einen relativ breiten Temperaturbereich aufweisen.

Diese Aufgabe wird erfindungsgemäß dadurch gelöst, daß dichte, chemisch heterogene Sinterkörper aus Pulvergemischen unterschiedlicher Perowskite, die zur Bildung homogener Mischkristalle befähigt sind, durch uniaxiales Heißpressen hergestellt werden.

Der Erfindung liegen folgende Erkenntnisse zugrunde:

Dielektrische Keramik aus Mischkristallen des $BaTiO_3$ weist dann eine ausreichende Temperaturstabilität der Dielektrizitätskonstanten auf, wenn sie über keinen definierten Curiepunkt mehr verfügt, bzw. einen so hohen Grad an chemischer Inhomogenität in ihrer Zusammensetzung zeigt, daß kein Curiepunkt sondern ein Curiebereich vorliegt. Wenn die chemische Zusammensetzung in kleinen lokalen Bereichen der Mikrostruktur schwankt, weist auch der Curiepunkt entsprechende lokale Schwankungen auf, die zu einer Verbreiterung des dielektrischen Maximums über weite Temperaturbereiche und so zu einer temperaturstabilen Dielektrizitätskonstanten führen.

Beim Sintern und Kornwachstum von Pulvergemischen, die zur Bildung homogener Mischkristalle befähigt sind, tritt in der Regel nun aber eine intensive Durchmischung der Komponenten auf, so daß die reproduzierbare Herstellung chemisch heterogener Körper aus lückenlos mischbaren Substanzen daher mit einem normalen Sinterprozeß nicht zu erreichen ist.

Nun könnte aus unterschiedlichen Perowskiten, die zur Bildung homogener Mischkristalle befähigt sind, dann eine chemisch heterogene Keramik durch Sintern hergestellt werden, wenn derartige Perowskit-Pulvergemische mit kleinen Mengen eines Zusatzes gesintert werden, die im Verlauf der Sinterung in dem Material punktuelle, lokal eng begrenzte Schmelzherde bilden und die noch während der Sinterung infolge chemischer Reaktion und Eindiffundieren in die Hauptphase wieder erstarren. Derartige Zusätze führen einerseits zu einer raschen Verdichtung des Materials bei relativ niedrigen Temperaturen und andererseits zur Konservierung der heterogenen Verteilung der Komponenten in dem keramischen Körper.

Es ist z.B. bekannt (J. Am. Ceram. Soc. 67 (1984), Seite 249 ff), dielektrische Keramik dieser Art durch Sintern von $BaTiO_3$ mit kleinen Mengen von niedrig schmelzendem $Bi_2O_3$ und Zusätzen von $Nb_2O_5$ oder $Ta_2O_5$ herzustellen; die genannten Zusätze zu $BaTiO_3$ bewirken lokal starke Verschiebungen des Curiepunktes. Hier ergibt sich jedoch das Problem, daß schon geringfügig zu hohe Sintertemperaturen oder eine zu lange Dauer der Sinterung die nachträgliche Homogenisierung der Massen und damit den Verlust der Temperaturstabilität der Dielektrizitätskonstanten bewirken.

Mit dem erfindungsgemäßen Verfahren ist es nun möglich, chemisch heterogene Perowskitkeramik, die hohe Werte für die relative Dielektrizitätskonstante $\epsilon_r$ aufweist, welche sich auch über einen relativ breiten Temperaturbereich nahezu nicht ändern, reproduzierbar und bei relativ niedrigen Temperaturen herzustellen.

Nach einer vorteilhaften Weiterbildung des erfindungsgemäßen Verfahrens werden für das heiß zu verpressende Pulvergemisch $BaTiO_3$ und $SrTiO_3$ eingesetzt. Daß auf diese Weise eine Perowskitkeramik mit den gewünschten dielektrischen Eigenschaften erreicht werden kann, ist ein besonders überraschendes Ergebnis. Aus J. Am. Ceram. Soc. 65 (1982), Seite 470 ff ist bekannt, daß beim Sintern von Pulvergemi-

2

schen aus BaTiO$_3$ und SrTiO$_3$ die Ba-Ionen wesentlich schneller in das SrTiO$_3$ eindiffundieren als umgekehrt. Danach ist für den Fachmann nicht zu erwarten, daß eine heterogene Keramik mit einem hohen Anteil an BaTiO$_3$ (zum Erreichen einer möglichst hohen Dielektrizitätskonstanten) und mit einem relativ niedrigen Anteil an SrTiO$_3$ (zur Verbreiterung des Curiebereiches) hergestellt werden kann.

Beim uniaxialen Heißpressen von Pulvergemischen mit einem relativ hohen Anteil an BaTiO$_3$ und einem relativ niedrigen Anteil an SrTiO$_3$ zeigte sich nun völlig unerwartet ein genau gegenteiliges Verhalten der beiden Komponenten BaTiO$_3$ und SrTiO$_3$: in dichten, bei 1150 °C heißgepreßten Keramiken aus BaTiO$_3$ und SrTiO$_3$ wurden mit Hilfe der Elektronenstrahl-Mikroanalyse im Raster-Transmissions-Elektronenmikroskop (STEM) die totale Auflösung der SrTiO$_3$-Partikel und eine heterogene Verteilung des Sr gefunden, dergestalt, daß die BaTiO$_3$-Körner von einer Schale aus einem Mischkristall von (Ba,Sr)TiO$_3$ umhüllt sind.

Die erreichte Struktur der Keramik aus BaTiO$_3$-Kernen, die von einer (Ba,Sr)TiO$_3$-Mischkristall-Schale umgeben sind, führt dazu, daß starke lokale Schwankungen des Curiepunktes auftreten, daß sich also quasi ein Curiebereich ergibt, was zu einer Stabilität der Dielektrizitätskonstanten über einen relativ breiten Temperaturbereich führt.

Als Ausführungsbeispiel wird die Herstellung von heißgepreßter Keramik aus einer Pulvermischung von BaTiO$_3$ und SrTiO$_3$ beschrieben:

Kommerziell erhältliche Pulver von BaTiO$_3$ und SrTiO$_3$ mit einer mittleren Korngröße von ≈ 1 μm wurden im molaren Verhältnis BaTiO$_3$ : SrTiO$_3$ = 9 : 1 als wässerige Suspension in einer Achatkugelmühle gemischt. Die anschließend getrockneten Pulver wurden mit einem Bindemittel aus einer wässerigen 5%igen Polyvinylalkohol-Lösung granuliert und in einer Stempelpresse bei einem Druck von 2000 bar zu Tabletten eines Durchmessers von 40 mm und einer Dicke von 2 mm verpreßt. Die relative Dichte der Grünkörper betrug etwa 55% der theoretischen Dichte. Zum Ausbrennen des Bindemittels wurden die Grünkörper auf einer ZrO$_2$-Unterlage an Luft langsam bis auf 600 °C aufgeheizt. Anschließend wurden die vorgepreßten Grünkörper zwischen Korundstempeln mit einer Zwischenschicht aus ZrO$_2$ über eine Dauer von 30 min an Luft bei einem Druck von 600 bar und bei einer Temperatur von 1150 °C heißgepreßt. Es ergaben sich Sinterkörper einer Dichte von mindestens 97 %.

Zur Bestimmung der dielektrischen Eigenschaften der erhaltenen Keramik wurden aus den heißgepreßten Proben runde Scheiben mit einem Durchmesser von 5 mm und einer Dicke von 0,5 mm herausgeschnitten, die mit einer Chrom/NickelHaftschicht und anschließend mit Gold-Elektroden bedampft wurden.

Die Messung der Werte für die Dielektrizitätskonstante und für die dielektrischen Verluste erfolgte in einer automatisch arbeitenden Meßbrücke bei 1 kHz und einer Spannung von 0,5 Veff.

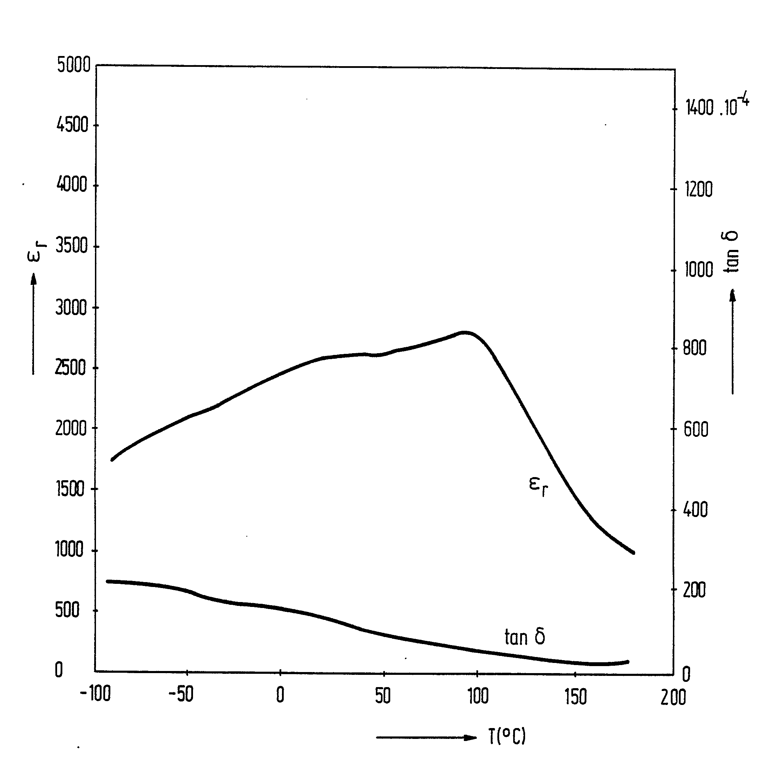

Wie aus der Figur ersichtlich ist, hat eine bei 1150 °C heißverpreßte Keramik aus einer Pulvermischung von BaTiO$_3$ und SrTiO$_3$ im Verhältnis 9:1 bei einer Temperatur von 25 °C eine Dielektrizitätskonstante $\epsilon_r$ = 2 600 bei einer Temperatur von 25 °C. Die Werte für die Dielektrizitätskonstante zeigen eine relativ geringe Abhängigkeit von der Temperatur.

Die Tabelle zeigt die gemessenen Werte der Dielektrizitätskonstanten $\epsilon_r$, der dielektrischen Verluste tan $\delta$ und die der relativen Änderung der Dielektrizitätskonstanten mit der Temperatur:

| T [°C] | $\epsilon_r$(T) | $\epsilon_r$(T)/ $\epsilon_r$(25°C) [%] | tan $\delta$ [%] |
|---|---|---|---|
| −50 | 2160 | −18 | 1,9 |
| −25 | 2320 | −12 | 1,5 |
| 0 | 2500 | −5 | 1,2 |
| 25 | 2630 | 0 | 1,0 |
| 50 | 2670 | 1,5 | 0,7 |
| 75 | 2730 | 4 | 0,5 |
| 100 | 2710 | 3 | 0,2 |
| 125 | 2130 | −19 | 0,1 |

3

## Ansprüche

l. Verfahren zur Herstellung eines Dielektrikums mit Perowskitstruktur auf Basis von Erdalkali-Titanaten, Erdalkali-Zirkonaten und/oder Erdalkali-Stannaten,
dadurch gekennzeichnet,
, daß dichte, chemisch heterogene Sinterkörper aus Pulvergemischen unterschiedlicher Perowskite, die zur Bildung homogener Mischkristalle befähigt sind, durch uniaxiales Heißpressen hergestellt werden.

2. Verfahren nach Anspruch l,
dadurch gekennzeichnet,
daß Pulvergemische aus Titanaten unterschiedlicher Erdalkalimetalle verpreßt werden.

3. Verfahren nach Anspruch 2,
dadurch gekennzeichnet,
daß Pulvergemische aus Bariumtitanat und Strontiumtitanat verpreßt werden.

4. Verfahren nach Anspruch 3, dadurch gekennzeichnet, daß ein Gemisch aus $BaTiO_3$-und $SrTiO_3$-Pulver im Verhältnis 9:l unter Zusatz eines Bindemittels zu Formkörpern einer relativen Dichte von etwa 55% der theoretischen Dichte verpreßt und nach Ausbrennen des Bindemittels bei einer Temperatur von $\approx$ ll5O °C zu Sinterkörpern einer Dichte von mindestens 97 % heißgepreßt werden.

5. Verwendung der nach dem Verfahren gemäß den Ansprüchen l bis 4 hergestellten Dielektrika für die Herstellung von Vielschichtkondensatoren.